# EUROPEAN PATENT SPECIFICATION

(11) **EP 1 352 144 B1**
(45) Date of publication and mention of the grant of the patent: **31.12.2008**
(21) Application number: 02711683.9
(22) Date of filing: 21.01.2002
(51) Int. Cl.: E05F 11/48

(54) **CONDUITLESS WINDOW REGULATOR**
FENSTERHEBER
REGULATEUR DE VITRES SANS CONDUIT

(30) Priority: 19.01.2001 US 263034 P
(43) Date of publication of application: 15.10.2003
(73) Proprietor: INTIER AUTOMOTIVE CLOSURES INC., Newmarket, Ontario L3Y 4X7 (CA)
(72) Inventor: REGNIER, Luc, R., Toronto, Ontario M4N 2V4 (CA); CLOUTIER, Denis, R., Newmarket Ontario L3Y 1H4 (CA)
(74) Representative: Prato, Roberto
(86) International application number: PCT/CA2002/000081
(87) International publication number: WO 2002/057581

(56) References cited:
- WO-A-00/35695
- DE-C- 19 738 795
- FR-A- 2 773 194
- US-A- 4 628 759
- US-A- 4 644 694

## Description

### Field of the Invention

This invention relates to a conduitless window regulator for a cable driven window lifter in an automotive vehicle which maintains tension in the cable during operation of the window regulator.

### Background of the Invention

Window regulators for a cable driven window lifter in an automotive vehicle commonly include a closed loop cable for transferring a force supplied by a motor to lift or lower a window pane. Opposing ends of the cable are secured to a cable drum and the cable is typically wound around the cable drum which is rotationally driven by the motor. The cable is also guided around upper and lower cable pulleys supported by opposing ends of a guide rail. A lifter is slidably coupled to the guide rail and attached to the cable between the upper and lower pulleys. The window pane is secured to the lifter such that the window pane is lifted or lowered by movement of the lifter along the guide rail between the upper and lower pulleys. This type of window regulator is disclosed in U.S. Patent no. 5,074,077.

Window regulators also often incorporate means for compensating for cable slackness when the lifter is in a relaxed state; that is, not lifting or lowering the window pane. The U.S. Patent no. 5,857,635 discloses a window regulator wherein one end of the cable is attached to a cable drum and the opposite end of the cable is attached to a conduit-like slide disposed inside the cable drum. When the cable is unloaded, a spring urges the slide rotationally about the cable drum to take up cable slackness. However, the slide does not maintain tension in the cable when the window pane is lifted or lowered by rotation of the cable drum.

Document DE-C-19738795 discloses all the features of the preamble of claim 1.

### Summary of the Invention

According to one aspect of the invention, there is provided a window regulator for operating a window pane of an automotive vehicle comprising a base plate having a guide rail extending between opposite upper and lower ends. A lifter plate is slidably coupled to the guide rail and adapted for supporting the window pane. A motor assembly is secured to the base plate and includes a drive housing and a power motor. A drive shaft is rotatably journaled to the drive housing. The drive shaft has a support flange supporting a center shaft and a key shaft spaced from and parallel to the center shaft. A pair of cable drums are supported on the drive shaft, each of the cable drums including a key slot for aligning with and receiving the key shaft therethrough. A cable having a first end connected to one of the cable drums is at least partially wound around the drum in a first direction while a second end is connected to the other of the cable drums and at least partially wound around the other drum in a second direction opposite the first direction. The lifter plate is secured to the cable between the first and second ends. A compression spring is operatively engaged with each of the respective cable drums for engagement between the key shaft and the drums for biasing the drums in opposite directions and maintaining tension on the cable between the first and second ends. The spring is mounted between said key shaft and said drums.

### Brief Description of the Drawings

In drawings which illustrate embodiments of the present invention,
Figure 1 is perspective view of the window regulator according to the subject invention;
Figure 2 is an exploded perspective view of Figure 1;
Figure 3 is an exploded perspective view of the motor assembly and cable drums;
Figure 4 is an assembled perspective view of Figure 3;
Figure 5 is an exploded perspective view of an alternative window regulator, which is shown only for illustrative purposes and does not belong to the claimed invention.
Figure 6 is a top view of a partially assembled window regulator which is shown only for illustrative purposes and does not belong to the claimed invention.
Figure 7 is a perspective view of an alternative cable drum for use with the window regulator, which is shown only for illustrative purposes and does not belong to the claimed invention.
Figure 8 is a perspective view of an alternative spring which is shown only for illustrative purposes and does not belong to the claimed invention.
Figure 9 is a perspective view of yet another alternative spring which is shown only for illustrative purposes and does not belong to the claimed invention, and
Figure 10 is a perspective view of still another alternative spring which is shown only for illustrative purposes and does not belong to the claimed invention.

### Detailed Description of the Invention

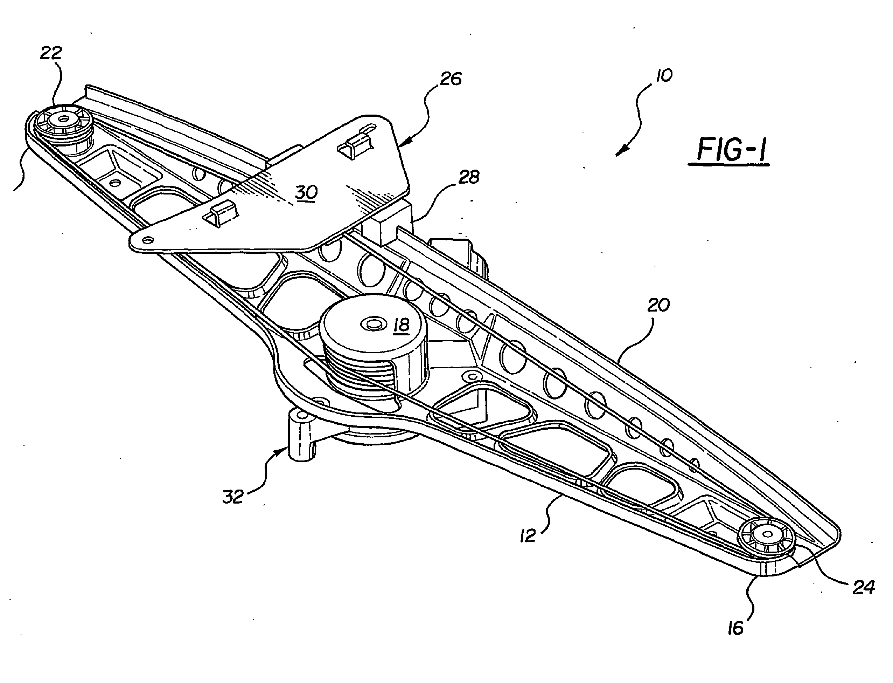

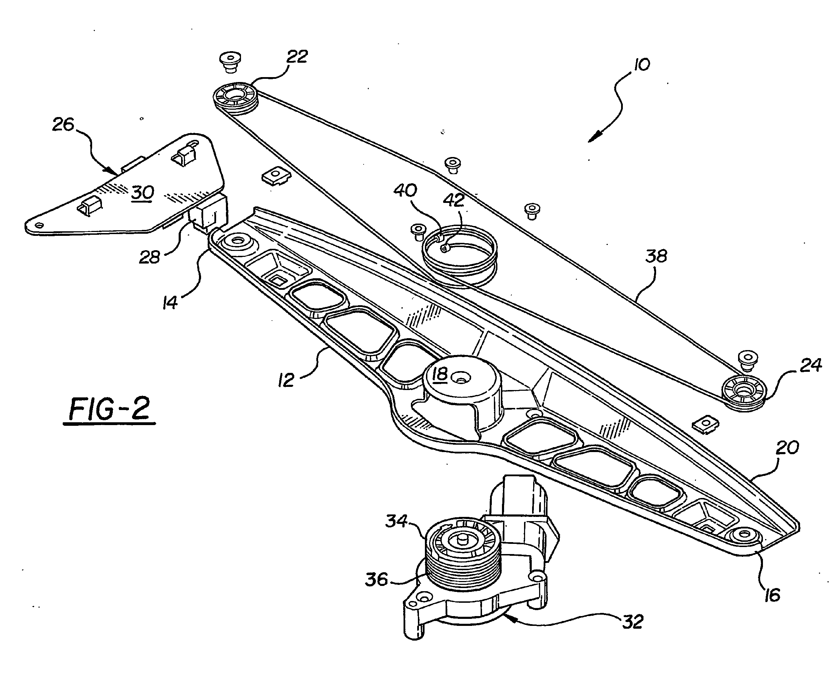

Referring to Figures 1 and 2, the conduitless window regulator is generally illustrated at 10. The window regulator 10 includes an elongated base plate 12 extending between an upper end 14 and a lower end 16. A raised cylindrical housing 18 is centered between the upper and lower end 14, 16. The base plate 12 further includes a guide rail 20 extending between the upper and lower end 14, 16 adjacent the housing 18. An upper pulley 22 is rotatably secured to the upper end 14 and a lower pulley 24 is rotatably secured to the lower end 16 of the base plate 12.

The window regulator 10 further includes a lifter plate 26 having a slide block 28 slidably coupled to the guide rail 20 on the base plate 12 for movement therealong between the upper and lower ends 14, 16. A window support plate 30 is secured to the slide block 28 for securing and supporting a lower portion of a window pane of an automotive vehicle as is commonly known in the art.

The window regulator 10 also includes a motor assembly 32 secured to the base plate 12 in opposite facing relationship to the raised cylindrical housing 18. A pair of disc-like cable drums 34, 36 are seated within the housing 18 and in operative engagement with the motor 32 as will be further described hereinbelow. A cable 38 is provided having opposite first and second ends 40, 42 secured to the respective cable drums 34, 36. The cable 38 is wound around each of the upper and lower pulleys 22, 24 and the lifter plate 26 is fixedly secured to the cable 38 between the upper and lower pulleys 22, 24. Alternatively, the window regulator 10 may include a pair of cables, one of which is connected between the upper pulley 22 and the top of the lifter plate 26 and the other of which is connected between the lower pulley 24 and the bottom of the lifter plate 26. Each of the cables may be at least partially wound around the respective cable drums 34, 36 and function similar to that of the single cable 38.

The motor assembly 32 rotates the cable drums 34, 36 in either the clockwise or counterclockwise direction to pull on the cable 38 and move the lifter plate 26 between the upper and lower pulleys 22, 24 to lift or lower the window pane. The subject invention relates to the cable drums 34, 36 providing constant tension on the cable 38 during the lifting or lowering of the window pane and in a relaxed position, or pre-loaded state.

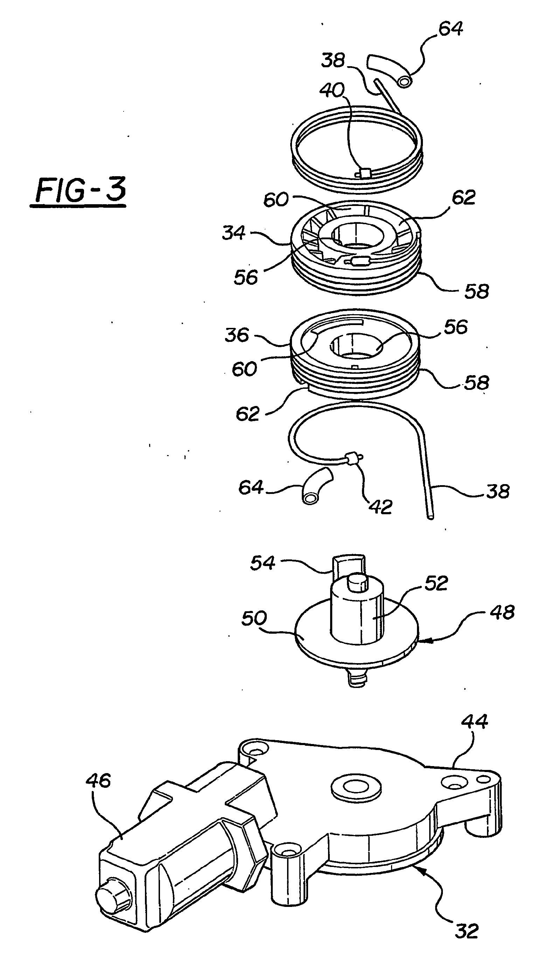

Specifically, referring to Figure 3, the motor assembly 32 includes a drive housing 44 supporting a power motor 46. A drive shaft 48 is coupled to the drive housing 44 for rotation in both a clockwise and counterclockwise direction. The drive shaft 48 includes a disc-like support flange 50 for supporting the cable drums 34, 36, a cylindrical center shaft 52 projecting from the flange 50 and extending through the center of each of the cable drums 34, 36, and a key shaft 54 projecting from the perimeter of the flange 50 adjacent to and spaced from the shaft 52.

Each of the cable drums 34, 36 include a center bore 56 for receiving the shaft 52 and a series of helical outer perimeter grooves 58 for receiving and winding the cable 38 therearound. The cable drums 34, 36 are symmetrical, and therefore, further details of the top cable drum 34 will be described. The drum 34 includes a key slot 60 for receiving the key shaft 54 therethrough and a recessed spring pocket 62 for receiving and supporting a spring 64 compressed by the key shaft 54. The spring 64 in the embodiment of Figures 1-4 is a coil-type compression spring for placement within the spring pocket 62 of each of the top and bottom drums 34, 36. It should be appreciated, however, that other types of springs may be utilized. For example, a coiled leaf-type spring may be used which is seated about the shaft 52 and key 54 having free ends for engagement between the key and the end of the slot 60 to compress the spring and tension the cable 38.

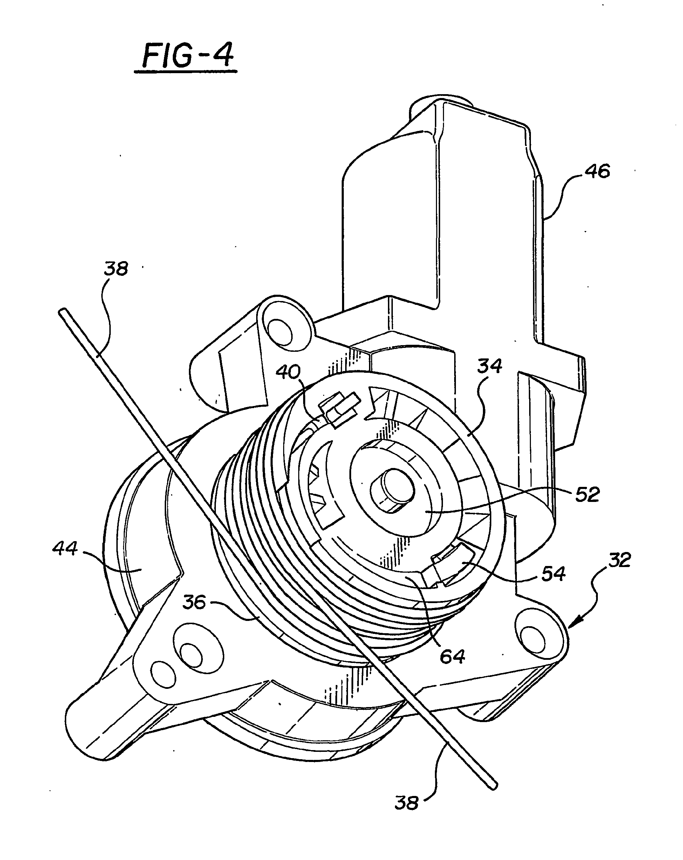

The first end 40 of the cable 38 is fixedly secured to the top cable drum 34 and the cable 38 is partially wound around the drum 34 in a counterclockwise direction resting within the helical grooves 58. Similarly, the second end 42 of the cable 38 is fixedly secured to the bottom drum 36 and the cable 38 is partially wound around the drum 36 in a clockwise direction resting within the helical grooves 58. Figure 4 discloses the cable drums 34, 36 and cable 38 assembled to the motor assembly 32.

During assembly, the compression springs 64 are placed into the spring pockets 62 of the respective top and bottom cable drums 34, 36. The bottom drum 36, with the cable 38 attached thereto, is placed on the shaft 52 with the spring 64 facing the shaft flange 50 and the key slot 60 aligned with the key shaft 54. The top drum 34, also with the cable 38 attached thereto, is then place on the shaft 52 with the spring 64 facing away from the flange 50 and the key slot 60 aligned with the key shaft 54. The drums 34, 36 are free to partially rotate on the shaft 52 approximately 2mm due to a spaced created between the opposing sides of the key 54 and the springs 64. That is, the spring 64 of the bottom drum 36 is positioned slightly spaced from one side of the key 54 and the spring 64 of the top drum is positioned slightly spaced from the opposite side of the key 54.

In a pre-loaded state, with the window regulator 10 fully assembly as shown in Figure 1, the lifter plate 26 is positioned midway along the guide rail 20 between the upper and lower pulleys 22, 24. The predetermined length of the cable 38 will cause the top and bottom drums 34, 36 to be positioned on the shaft 52 in such a way that the key shaft 54 is forced approximately 1-2mm from the end of the slot 60 in the lower drum 36 and the spring 64 is fully compressed in the spring pocket 62. When the motor 46 is powered to rotate the drive shaft 48 in a clockwise direction, the key shaft 54 will engage and compress the spring 64 in the upper drum 34 until the key 54 contacts the end of the slot 60. The cable 38 winds around the drum 34 as it rotates and thus pulls the lifter plate 26 downwardly to lower the window pane. The bottom drum 36 maintains its pre-loaded state as it simultaneously rotates to maintain tension on the cable 38 while it unwinds from the bottom drum 36.

After the lifter plate 26 reaches the bottom of the rail 20, the motor 46 stops powering the drive shaft 48 and the drums 34, 36 are maintained in the current operating state. When the motor 46 is reversed to turn the drive shaft 48 and drums 34, 36 in the counterclockwise direction, the opposite movement of the key 54 with the drums 34, 36 occurs.

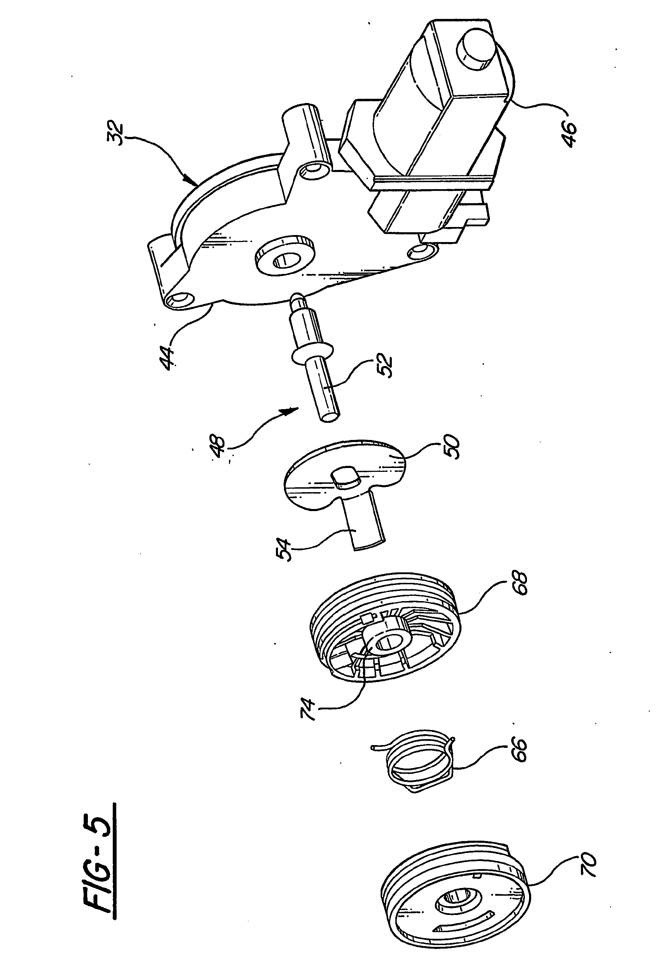

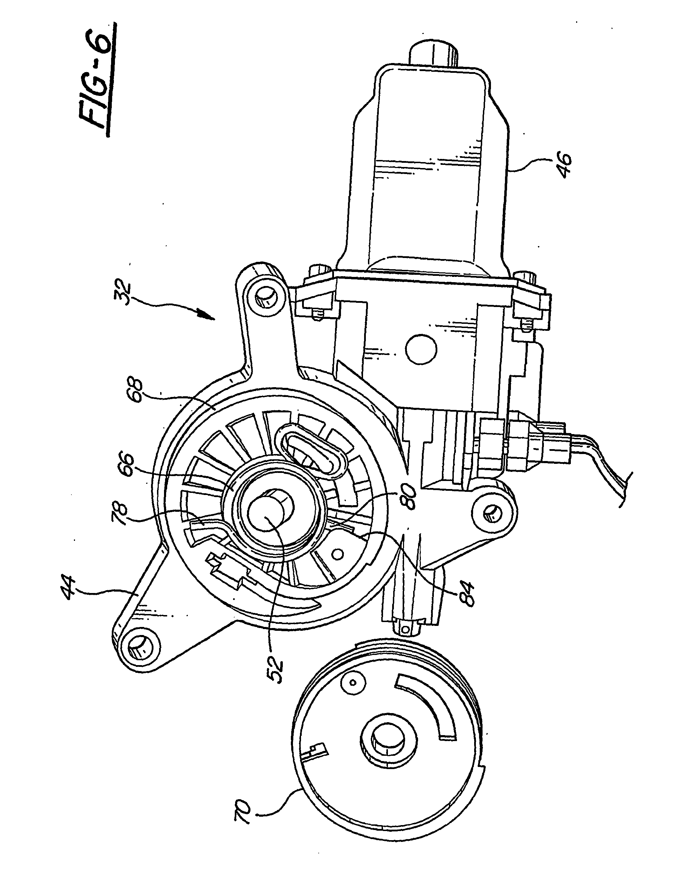

Referring to Figures 5-10, an alternative embodiment of the cable drums and compression spring is shown. which is depicted only for illustrative purposes and does not belong to the claimed invention. The alternative embodiment includes a single spring 66 positioned between and operatively engaged with each of the cable drums 68, 70. Specifically, the first cable drum 68 is centered on the center drive shaft 52 and supported by the flange 50. The key shaft 54 is similarly received through a key slot 72 of the drum 68. The drum 68 includes a raised hub 74 surrounding its center bore 75 for receiving and supporting the spring 66. The second cable drum 70 is then centered on the center drive shaft 52 and supported by the first drum 68. The key shaft 54 is received through the key slot 72 of the second drum 70 and the spring 66 is seated on the raised hub 74 thereof such that the spring 66 is positioned between the drums 68, 70.

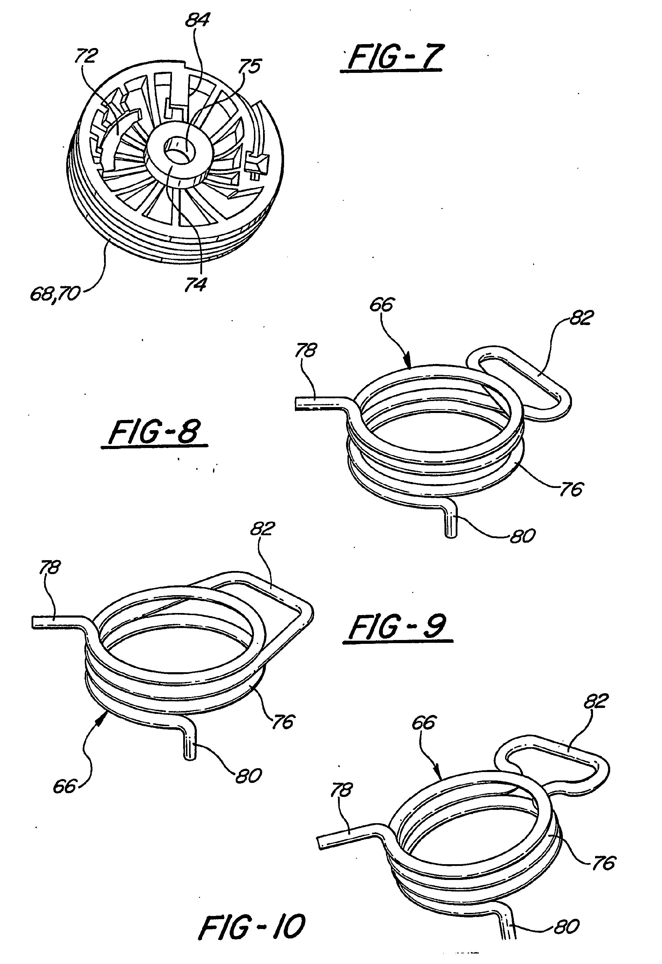

Referring specifically to Figures 8-10, the spring 66 includes a cylindrical coil 76 terminating at upper and lower outwardly projection spring tabs 78, 80. A portion of the coil 76 forms a projecting loop 82 for receiving the key shaft 54 therethrough to prevent rotation of the spring 66 relative to the drums 68, 70. The loop 82 may be formed in varying configurations as desired and as shown in Figures 8-10.

Each of the drums 68, 70 further include a vertical blocking wall 84 for abutting with the respective upper and lower spring tabs 78, 80 and for biasing the drums 68, 70 in the respective clockwise and counterclockwise directions similar to the first embodiment to take up slack in the cable 38 wound around the drums 68, 70. The operation of the alternative embodiment is the same as the first embodiment, except a single coiled spring 66 is utilized between the first and second drums 68, 70 and keyed to the key shaft 54.

The above-described embodiment of the invention is intended to be an example of the present invention and alterations and modifications may be effected thereto, by those of skill in the art, without departing from the scope of the invention, as defined by the claims.

## Claims

1. A window regulator (10) for operating a window pane of an automotive vehicle comprising :
- a base plate (12) having a guide rail (20) extending between opposite upper and lower ends (14, 16);
- a lifter plate (26) slidably coupled to said guide rail (20) and adapted for supporting the window pane;
- a motor assembly (32) secured to said base plate (12), said motor assembly (32) including a drive housing (44) and a power motor (46);
- a drive shaft (48) rotatably journaled to said drive housing (44) for rotation by said power motor (46), said drive shaft (48) having a support flange (50) supporting a center shaft (52) and a key shaft (54) spaced from and parallel to said center shaft (52);
- a pair of cable drums (34, 36) received on said center shaft (52) and supported by said drive shaft (48), each of said cable drums (34, 36) including a key slot (60) for aligning with and receiving said key shaft (54) therethrough ;
- a cable (38) having a first end (40) connected to one of said cable drums (34, 36) and at least partially wound around said cable drum (34) in a first direction, and a second end (42) connected to said other (42) of said cable drums (34, 36) and at least partially wound around said other drum (36) in a second direction opposite said first direction;
- said lifter plate (26) being secured to said cable (38) between said first and second ends (40, 42); and
- a spring arrangement (64) operatively engaged with each of said respective cable drums (34, 36) for engagement between said key shaft (54) and said drums (34, 36) for biasing said drums (34, 36) in opposite directions and maintaining tension on said cable (38) between said first (40) and second (42) ends;
**characterized in that** said spring arrangement (64) is a compression spring arrangement and is mounted between said key shaft (54) and said drums (34, 36).

2. A window regulator as claimed in claim 1, **characterized in that** each of said cable drums (34, 36) includes a spring pocket (62) for engaging at least a portion of said spring arrangement (64) to compress said spring arrangement (64) between said respective drum (34, 36) and said key shaft (56).

3. A window regulator as claimed in claim 1 or 2,
**characterized in that** each of said cable drums (34, 36) includes a center bore (56) for receiving said center shaft (52) therethrough to mount said drums (34, 36) on said drive shaft (52).

4. A window regulator as claimed in anyone of the foregoing claims, **characterized in that** each of said cable drums (34, 36) includes a series of helical outer perimeter grooves (58) for receiving and winding said cable (38) around each of said respective drums (34, 36) in said opposite first and second directions.

5. A window regulator according to anyone of previous claim, **characterized in that** the spring arrangement comprises a pair of compression springs (64); a first compression spring (64) being seated in said spring pocket (62) of a first one (34) of said cable drums (34, 36) and compressed between said first cable drum (34) and said key shaft (54); a second compression spring (64) being seated in said spring pocket (62) of a second one (36) of said cable drums (34, 36), and compressed between said second cable drum (36) and said key shaft (54) during rotation of said cable drums (34, 36) in said respective first and second directions.

6. A window regulator as claimed in anyone of the foregoing claims, **characterized in that** said base plate (12) includes a upper pulley (22) rotatably supported at said upper end (14) and a lower pulley (24) rotatably supported at said lower end (16); said cable (38) being wounded around each of said upper and lower pulleys (22, 24) between said cable drums (34, 36) and said lifter plate (26).

7. A window regulator as claimed in anyone of the foregoing claims, **characterized in that** said base plate (12) includes a raised cylindrical housing (18) between said upper and lower ends (14, 16) for receiving and supporting said cable drums (34, 36) on said base plate (12).

8. A window regulator as claimed in anyone of the foregoing claims, **characterized in that** said lifter plate (26) includes a slide block (28) slidably coupled to said guide rail (20) of said base plate (12) and a support plate (30) mounted to said slide block (28) for supporting the window pane during movement between said upper and lower ends (14, 16) of said base plate (12).

9. A window regulator according to claim 1 **characterized in that** said cable (38) is made of a pair of cables; a first one of said cables having a first end connected to one (34) of said cable drums (34, 36) and at least partially wound around said drum (34) in a first direction, and a second end connected to said lifter plate (12), and a second one of said cables having a first end connected to the other (36) of said cable drums (34, 36) and at least partially wound around said other drum (36) in a second direction opposite said first direction, and a second end connected to said lifter plate (12).

## Patentansprüche

1. Fensterheber (10) zum Betätigen einer Fensterscheibe eines Kraftfahrzeuges, umfassend:
- eine Grundplatte (12) mit einer Führungsschiene (20), die sich zwischen gegenüberliegenden oberen und unteren Enden (14, 16) erstreckt,
- eine Hebeplatte (26), die gleitend bzw. verschiebbar an die Führungsschiene (20) gekoppelt und zum Stützen der Fensterscheibe ausgelegt ist,
- eine Motoranordnung (32), die an der Grundplatte (12) gesichert bzw. befestigt ist, wobei die Motoranordnung (32) ein Antriebsgehäuse (44) und einen Leistungsmotor (46) enthält,
- eine Antriebswelle (48), die drehbar in Zapfen an dem Antriebsgehäuse (44) sitzt, zur Rotation durch den Leistungsmotor (46), wobei die Antriebswelle (48) einen Stützflansch (50) aufweist, um eine mittlere Welle (52) und eine Keilwelle (54), die von der mittleren Welle (52) beabstandet und parallel zu ihr ist, zu stützen,
- ein Paar Kabeltrommeln (34, 36), die auf der mittleren Welle (52) aufgenommen und durch die Antriebswelle (48) gestützt sind, wobei jede der Kabeltrommeln (34, 36) eine Keilnut (60) enthält, um die Keilwelle (54) hiermit auszurichten bzw. zu fluchten und dort hindurch aufzunehmen,
- ein Kabel (38) mit einem ersten Ende (40), das mit einer der Kabeltrommeln (34, 36) verbunden ist und zumindest teilweise um die Kabeltrommel (34) herum in eine erste Richtung gewickelt ist, und einem zweiten Ende (42), das mit dem anderen Ende (42) der Kabeltrommeln (34, 36) verbunden ist und zumindest teilweise um die andere Trommel (36) herum in eine zweite, der ersten Richtung entgegengesetzte Richtung gewickelt ist,
- wobei die Hebeplatte (26) an dem Kabel (38) zwischen den ersten und zweiten Enden (40, 42) gesichert ist, und
- eine Federanordnung (64), die operativ bzw. in Betrieb bzw. wirksam in jede der entsprechenden Kabeltrommeln (34, 36) eingreift, zwecks Eingriff zwischen der Keilwelle (54) und den Trommeln (34, 36), um die Trommeln (34, 36) in entgegengesetzte Richtungen vorzuspannen und um die Spannung auf das Kabel (38) zwischen dem ersten (40) und dem zweiten (42) Ende aufrechtzuerhalten,
**dadurch gekennzeichnet, dass** die Federanordnung (64) eine Druckfederanordnung ist und zwischen der Keilwelle (54) und den Trommeln (34, 36) befestigt ist.

2. Fensterheber nach Anspruch 1, **dadurch gekennzeichnet, dass** jede der Kabeltrommeln (34, 36) eine Federtasche (62) enthält, um in wenigstens einen Abschnitt der Federanordnung (64) einzugreifen, um die Federanordnung (64) zwischen der entsprechenden Trommel (34, 36) und der Keilwelle (56) zusammenzudrücken.

3. Fensterheber nach Anspruch 1 oder 2, **dadurch gekennzeichnet, dass** jede der Kabeltrommeln (34, 36) eine mittlere Bohrung (56) zur Aufnahme der mittleren Welle (52) durch diese hindurch enthält, um die Trommeln (34, 36) auf der Antriebswelle (52) zu befestigen.

4. Fensterheber nach einem der vorhergehenden Ansprüche, **dadurch gekennzeichnet, dass** jede der Kabeltrommeln (34, 36) eine Reihe von spiralförmigen äußeren Umfangsnuten (58) enthält, um das Kabel (38) aufzunehmen und es um jedes der entsprechenden Kabel (34, 36) herum in entgegengesetzte erste und zweite Richtungen zu wickeln.

5. Fensterheber nach einem vorhergehenden Anspruch, **dadurch gekennzeichnet, dass** die Federanordnung ein Paar Druckfedern (64) enthält, wobei eine erste Druckfeder (64) in der Federtasche (62) einer ersten (34) der Kabeltrommeln (34, 36) sitzt bzw. gelagert ist und zwischen der ersten Kabeltrommel (34) und der Keilwelle (54) zusammengedrückt wird, wobei eine zweite Druckfeder (64) in der Federtasche (62) einer zweiten (36) der Kabeltrommeln (34, 36) sitzt und zwischen der zweiten Kabeltrommel (36) und der Keilwelle (54) während der Rotation der Kabeltrommeln (34, 36) in die entsprechende erste und zweite Richtung zusammengedrückt wird.

6. Fensterheber nach einem der vorhergehenden Ansprüche, **dadurch gekennzeichnet, dass** die Grundplatte (12) eine obere Rolle (22) enthält, die drehbar am oberen Ende (14) gestützt ist, und eine untere Rolle (24), die drehbar am unteren Ende (16) gestützt ist, wobei das Kabel (38) um jede der oberen und unteren Rollen (22, 24) zwisehen den Kabeltrommeln (34, 36) und der Hebeplatte (26) herum gewickelt ist.

7. Fensterheber nach einem der vorhergehenden Ansprüche, **dadurch gekennzeichnet, dass** die Grundplatte (12) ein erhöhtes zylindrisches Gehäuse (18) zwischen den unteren und oberen Enden (14, 16) enthält, um die Kabeltrommeln (34, 36) auf der Grundplatte (12) aufzunehmen und zu stützen.

8. Fensterheber nach einem der vorhergehenden Ansprüche, **dadurch gekennzeichnet, dass** die Hebeplatte (26) einen Gleitblock (28), der verschiebbar bzw. gleitend mit der Führungsschiene (20) der Grundplatte verbunden ist, und eine Stützplatte (30) enthält, die an dem Gleitblock (28) befestigt ist, um die Fensterscheibe während der Bewegung zwischen den oberen und unteren Enden (14, 16) der Grundplatte (12) zu stützen.

9. Fensterheber nach Anspruch 1, **dadurch gekennzeichnet, dass** das Kabel (38) aus einem Paar Kabel hergestellt ist, wobei ein erstes dieser Kabel ein erstes Ende, das mit einer (34) der Kabeltrommeln (34, 36) verbunden und wenigstens teilweise um die Trommel (34) herum in eine erste Richtung gewickelt ist, und ein zweites Ende hat, das mit der Hebeplatte (12) verbunden ist, und wobei ein zweites der Kabel ein erstes Ende, das mit der anderen (36) der Kabeltrommeln (34, 36) verbunden und wenigstens teilweise um die andere Trommel (36) herum in eine zweite, der ersten Richtung entgegengesetzte Richtung gewickelt ist, und ein zweites Ende hat, das mit der Hebeplate (12) verbunden ist.

## Revendications

1. Régulateur de fenêtre (10) pour actionner une vitre de fenêtre de véhicule automobile, comprenant :
- une plaque de base (12) ayant un rail de guidage (20) s'étendant entre des extrémités supérieure et inférieure opposées (14, 16) ;
- une plaque élévatrice (26) couplée à coulissement audit rail de guidage (20) et adaptée pour supporter la vitre de fenêtre ;
- un assemblage motorisé (32) fixé à ladite plaque de base (12), ledit assemblage motorisé (32) comprenant un boîtier de commande (44) et un moteur d'alimentation (46) ;
- un arbre moteur (48) tourillonné à rotation dans ledit boîtier de commande (44) pour pouvoir tourner sous l'action du moteur d'alimentation (46), ledit arbre moteur (48) ayant une bride de support (50) supportant un arbre central (52) et un arbre claveté (54) séparé dudit arbre central (52) et parallèle à celui-ci ;
- deux tambours à câble (34, 36) reçus sur ledit arbre central (52) et supportés par ledit arbre moteur (48), chacun desdits tambours à câble (34, 36) comprenant une rainure de clavette (60) à aligner avec ledit arbre claveté (54) et recevant celui-ci ;
- un câble (38) ayant une première extrémité (40) raccordé à l'un desdits tambours à câble (34, 36) et au moins en partie enroulé autour dudit tambour à câble (34) dans un premier sens et une seconde extrémité (42) raccordée à ladite autre extrémité (42) desdits tambours à câble (34, 36) et au moins en partie enroulé autour dudit autre tambour (36) dans un second sens opposé audit premier sens ;
- ladite plaque élévatrice (26) étant fixée audit câble (38) entre lesdites première et seconde extrémités (40, 42) ; et
- un aménagement à ressort (64) engagé en service sur chacun desdits tambours à câble respectifs (34, 36) pour un engagement entre ledit arbre claveté (54) et lesdits tambours (34, 36) afin de solliciter lesdits tambours (34, 36) dans des sens opposés et de maintenir une tension sur ledit câble (38) entre lesdites première (40) et seconde (42) extrémités ;
**caractérisé en ce que** ledit aménagement à ressort (64) est un aménagement à ressort de compression et est monté entre ledit arbre claveté (54) et lesdits tambours (34, 36).

2. Régulateur de fenêtre selon la revendication 1, **caractérisé en ce que** chacun desdits tambours à câble (34, 36) comprend une poche à ressort (62) pour engager au moins une partie dudit aménagement à ressort (64) afin de comprimer ledit aménagement à ressort (64) entre ledit tambour respectif (34, 36) et ledit arbre claveté (56).

3. Régulateur de fenêtre selon la revendication 1 ou 2, **caractérisé en ce que** chacun desdits tambours à câble (34, 36) comprend un orifice central (56) pour y recevoir ledit arbre central (52) afin de monter lesdits tambours (34, 36) sur ledit arbre moteur (52).

4. Régulateur de fenêtre selon l'une quelconque des revendications précédentes, **caractérisé en ce que** chacun desdits tambours à câble (34, 36) comprend une série de rainures hélicoïdales de périmètre externe (58) pour recevoir et enrouler ledit câble (38) autour de chacun desdits tambours à câble respectifs (34, 36) dans lesdits premier et second sens opposés.

5. Régulateur de fenêtre selon l'une quelconque des revendications précédentes, **caractérisé en ce que** l'aménagement à ressort comprend une paire de ressorts de compression (64) ; un premier ressort de compression (64) logé dans ladite poche à ressort (62) d'un premier (34) desdits tambours à câble (34, 36) et comprimé entre ledit premier tambour à câble (34) et ledit arbre claveté (54) ; un second ressort de compression (64) logé dans ladite poche à ressort (62) d'un second (36) desdits tambours à câble (34, 36) et comprimé entre ledit second tambour à câble (36) et ledit arbre claveté (54) pendant la rotation desdits tambours à câble (34, 36) dans lesdits premier et second sens respectifs.

6. Régulateur de fenêtre selon l'une quelconque des revendications précédentes, **caractérisé en ce que** ladite plaque de base (12) comprend une poulie supérieure (22) supportée à rotation sur ladite extrémité supérieure (14) et une poulie inférieure (24) supportée à rotation sur ladite extrémité inférieure (16) ; ledit câble (38) étant enroulé autour de chacune desdites poulies supérieure et inférieure (22, 24) entre lesdits tambours à câble (34, 36) et ladite plaque élévatrice (26).

7. Régulateur de fenêtre selon l'une quelconque des revendications précédentes, **caractérisé en ce que** ladite plaque de base (12) comprend un boîtier cylindrique soulevé (18) entre lesdites extrémités supérieure et inférieure (14, 16) pour recevoir et supporter lesdits tambours à câble (34, 36) sur ladite plaque de base (12).

8. Régulateur de fenêtre selon l'une quelconque des revendications précédentes, **caractérisé en ce que** ladite plaque élévatrice (26) comprend un bloc coulissant (28) couplé à coulissement audit rail de guidage (20) de ladite plaque de base (12) et une plaque de support (30) montée sur ledit bloc coulissant (28) pour supporter la vitre de la fenêtre pendant le mouvement entre lesdites extrémités supérieure et inférieure (14, 16) de ladite plaque de base (12).

9. Régulateur de fenêtre selon la revendication 1, **caractérisé en ce que** ledit câble (38) est formé d'une paire de câbles ; un premier desdits câbles ayant une première extrémité raccordée à l'un (34) desdits tambours à câble (34, 36) et au moins en partie enroulée autour dudit tambour (34) dans un premier sens, et une seconde extrémité raccordée à ladite plaque élévatrice (12), et un second desdits câbles ayant une première extrémité raccordée à l'autre (36) desdits tambours à câble (34, 36) et au moins en partie enroulée autour dudit tambour (36) dans un second sens opposé audit premier sens, et une seconde extrémité raccordée à ladite plaque élévatrice (12).
